# FASCICULE DE BREVET EUROPEEN

(11) **EP 2 447 149 B1**
(45) Date de publication et mention de la délivrance du brevet: **11.12.2013**
(21) Numéro de dépôt: 11306382.0
(22) Date de dépôt: 26.10.2011
(51) Int. Cl.: B63H 23/24, H02J 4/00

(54) **Navire avec un système redondant d'alimentation électrique commun au propulseur bâbord et au propulseur tribord**
Schiff mit einem redundanten Stromversorgungssystem, das dem Backbord- und dem Steuerbordantriebssystem gemein ist
Ship with a redundant power supply system shared between the port propeller and the starboard propeller

(30) Priorité: 27.10.2010 FR 1058850
(43) Date de publication de la demande: 02.05.2012
(73) Titulaire: GE Energy Power Conversion Technology Limited, Rugby Warwickshire CV21 1BU (GB)
(72) Inventeur: Leclere, Loic, 90800 BAVILLIERS (FR)
(74) Mandataire: Serjeants LLP

(56) Documents cités:
- WO-A1-2008/081189
- DE-A1- 19 519 424
- DE-A1- 19 522 302
- GB-A- 2 442 770

## Description

La présente invention concerne un navire s'étendant suivant une direction longitudinale, comprenant un navire s'étendant suivant une direction longitudinale, comprenant un réseau électrique et une chaine de propulsion longitudinale connectée au réseau électrique, la chaine de propulsion longitudinale comportant :
- deux propulseurs longitudinaux propres à déplacer le navire selon sa direction longitudinale, et
   pour chaque propulseur longitudinal:
   + un moteur électrique d'entraînement du propulseur longitudinal, connecté en entrée dudit propulseur,
   + un système d'alimentation du moteur électrique, connecté en entrée dudit moteur et relié au réseau électrique.

On connaît un navire du type précité. Le réseau électrique est un réseau alternatif, et chaque système d'alimentation comporte deux convertisseurs de fréquence connectés en parallèle au réseau alternatif. Chaque convertisseur de fréquence présente une puissance électrique sensiblement égale à la moitié de la puissance électrique maximale du moteur électrique correspondant. Chaque convertisseur de fréquence d'un système d'alimentation respectif est relié au moteur électrique correspondant par l'intermédiaire d'un dispositif d'isolement, le dispositif d'isolement étant propre à isoler électriquement ce convertisseur du moteur électrique correspondant.

Toutefois, le contrôle de l'alimentation des moteurs électriques par les convertisseurs de fréquence et via le dispositif d'isolement est relativement complexe, le contrôle des moteurs électriques dépendant de plusieurs paramètres tels que la vitesse du navire, la puissance électrique fournie par chaque convertisseur, la position du dispositif d'isolement de chaque convertisseur.

Un autre navire du type précité est connu du WO 2008/081189 A1.

Le but de l'invention est de proposer un navire comprenant une chaîne de propulsion longitudinale permettant de faciliter l'alimentation d'un moteur électrique d'entraînement d'un propulseur longitudinal.

A cet effet, l'invention a pour objet un navire du type précité, caractérisé en ce qu'il comprend en outre un système additionnel d'alimentation des moteurs électriques, le système additionnel d'alimentation comportant une unique sortie de puissance et étant relié aux deux moteurs électriques par l'intermédiaire d'un dispositif de commutation, le dispositif de commutation étant propre à connecter l'un ou l'autre des deux moteurs électriques à l'unique sortie de puissance du système additionnel d'alimentation.

Suivant d'autres modes de réalisation, le navire comprend une ou plusieurs des caractéristiques suivantes, prises isolément ou suivant toutes les combinaisons techniquement possibles :
- la chaîne de propulsion longitudinale est constituée de deux propulseurs longitudinaux, de deux moteurs électriques d'entraînement, de trois systèmes d'alimentation des moteurs électriques, et du dispositif de commutation ;
- la puissance électrique de chaque système d'alimentation est supérieure ou égale à la puissance électrique maximale du moteur électrique correspondant ;
- le réseau électrique est un réseau alternatif, et chaque système d'alimentation comporte un convertisseur de fréquence, afin de faire varier la vitesse de rotation du moteur électrique correspondant ;
- le convertisseur de fréquence comporte un redresseur de tension connecté à un onduleur de tension ;
- le redresseur de tension comporte une borne d'entrée pour chaque phase du courant alternatif, deux bornes de sortie, deux branches de commutation pour chaque phase du courant alternatif, chaque branche de commutation étant connectée entre une borne d'entrée respective et la borne de sortie correspondante, chaque branche de commutation comportant au moins un interrupteur électronique commandable ;
- le navire comprend en outre des moyens de connexion d'au moins un système d'alimentation à un réseau électrique alternatif terrestre, le système d'alimentation est bidirectionnel en puissance, et le convertisseur de fréquence est propre à convertir le courant fourni par le réseau terrestre présentant une première fréquence en un courant délivré au réseau alternatif du navire présentant une deuxième fréquence ;
- le réseau électrique est un réseau alternatif, et le système additionnel d'alimentation est propre à fournir de l'énergie réactive au réseau alternatif du navire, ou à absorber de l'énergie réactive depuis le réseau alternatif du navire, lorsque le système additionnel d'alimentation n'est pas connecté à l'un des deux moteurs électriques ;
- le convertisseur de fréquence comporte un transformateur de tension, un pont de diodes dodécaphasé connecté en sortie du transformateur de tension, un hacheur connecté en sortie du pont de diodes dodécaphasé, et un onduleur de tension connecté en sortie du hacheur ; et
- le hacheur comporte une résistance de freinage.

Ces caractéristiques et avantages de l'invention apparaîtront à la lecture de la description qui va suivre, donnée uniquement à titre d'exemple, et faite en référence aux dessins annexés, sur lesquels :
- la figure 1 est une représentation schématique d'un navire comprenant une chaîne de propulsion longitudinale connectée à un réseau électrique, la chaîne de propulsion longitudinale comprenant deux propulseurs longitudinaux,
- la figure 2 est une représentation schématique d'un système d'alimentation d'un moteur électrique d'entraînement d'un propulseur longitudinal de la figure 1,
- la figure 3 est un schéma électrique d'un redresseur de tension du système d'alimentation de la figure 2 selon un premier mode de réalisation, et
- la figure 4 est un schéma électrique analogue à celui de la figure 2 selon un deuxième mode de réalisation de l'invention.

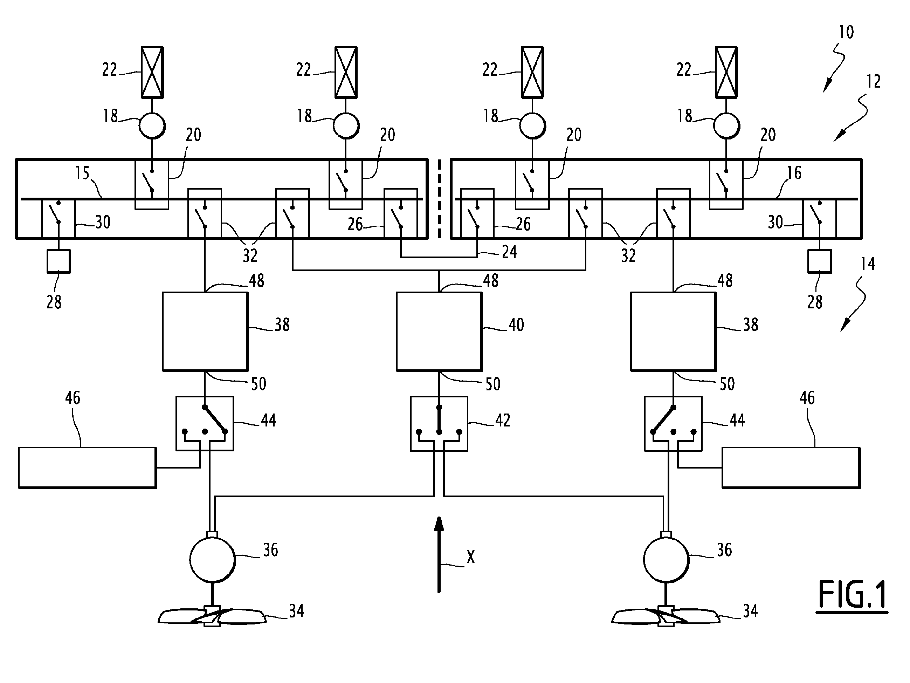

Sur la figure 1, un navire 10 s'étendant suivant une direction longitudinale X comprend un réseau électrique 12 et une chaîne de propulsion longitudinale 14 connectée au réseau électrique. La direction longitudinale X, représentée sur la figure 1, s'étend de la poupe vers la proue du navire 10.

Dans l'exemple de réalisation de la figure 1, le réseau électrique 12 est un réseau alternatif. Le réseau électrique alternatif est, par exemple, un réseau triphasé. Le réseau alternatif 12 comprend un bus bâbord 15 et un bus tribord 16 de circulation du courant électrique, quatre générateurs électriques 18 reliés aux bus de circulation par l'intermédiaire de premiers disjoncteurs 20 et quatre moteurs diesel 22 d'entraînement des générateurs électriques. Deux générateurs électriques 18 sont propres à délivrer un courant triphasé au bus bâbord 15, et deux autres générateurs électriques 18 sont propres à délivrer un courant triphasé au bus tribord 16.

Le réseau électrique 12 comprend une traverse 24 de liaison électrique entre le bus bâbord 15 et le bus tribord 16, et deux deuxièmes disjoncteurs 26 connectés entre chaque extrémité de la traverse et le bus respectif.

Le réseau électrique 12 comprend également deux transformateurs 28 de distribution propres à délivrer un courant électrique basse tension vers un réseau secondaire non représenté, chaque transformateur de distribution 28 étant connecté à un bus 15, 16 respectif par l'intermédiaire d'un troisième disjoncteur 30.

Le réseau électrique 12 comprend également des quatrièmes disjoncteurs 32 connectés entre un bus 15, 16 respectif et la chaîne de propulsion 14.

La chaîne de propulsion longitudinale 14 comporte deux propulseurs longitudinaux 34 propres à déplacer le navire selon sa direction longitudinale X et, pour chaque propulseur longitudinal, un moteur électrique 36 d'entraînement du propulseur longitudinal et un système 38 d'alimentation du moteur électrique. La chaîne de propulsion longitudinale comprend en outre un système additionnel 40 d'alimentation des moteurs électriques 36 et un dispositif principal de commutation 42 reliant le système additionnel d'alimentation aux deux moteurs électriques.

La chaîne de propulsion longitudinale 14 comprend, par exemple, un propulseur longitudinal 34 bâbord et un propulseur longitudinal 34 tribord, un moteur électrique 36 bâbord et un moteur électrique 36 tribord, ainsi qu'un système d'alimentation 38 bâbord et un système d'alimentation 38 tribord. Autrement dit, la chaîne de propulsion longitudinale 14 comporte une chaîne bâbord et une chaîne tribord, chaque chaîne bâbord, tribord comportant un propulseur, un moteur électrique d'entraînement du propulseur et un système d'alimentation du moteur électrique. En complément, chaque chaîne bâbord, tribord comporte un dispositif auxiliaire de commutation bâbord, tribord et un dispositif de connexion bâbord, tribord au réseau électrique terrestre.

Dans l'exemple de réalisation de la figure 1, la chaîne de propulsion longitudinale 14 est constituée des deux propulseurs longitudinaux 34, des deux moteurs électriques d'entraînement 36, des trois systèmes d'alimentation 38, 40 des moteurs électriques, et du dispositif principal de commutation 42.

En complément, la chaîne de propulsion 14 comprend deux dispositifs auxiliaires de commutation 44, chaque dispositif auxiliaire de commutation 44 reliant un système d'alimentation 38 respectif à un moteur électrique 36 correspondant, d'une part, et à un dispositif 46 de connexion à un réseau électrique terrestre, d'autre part.

Chaque moteur électrique d'entraînement 36 est connecté en entrée d'un propulseur longitudinal correspondant. Le moteur électrique 36 est, par exemple, un moteur synchrone. En variante, le moteur électrique 36 est asynchrone.

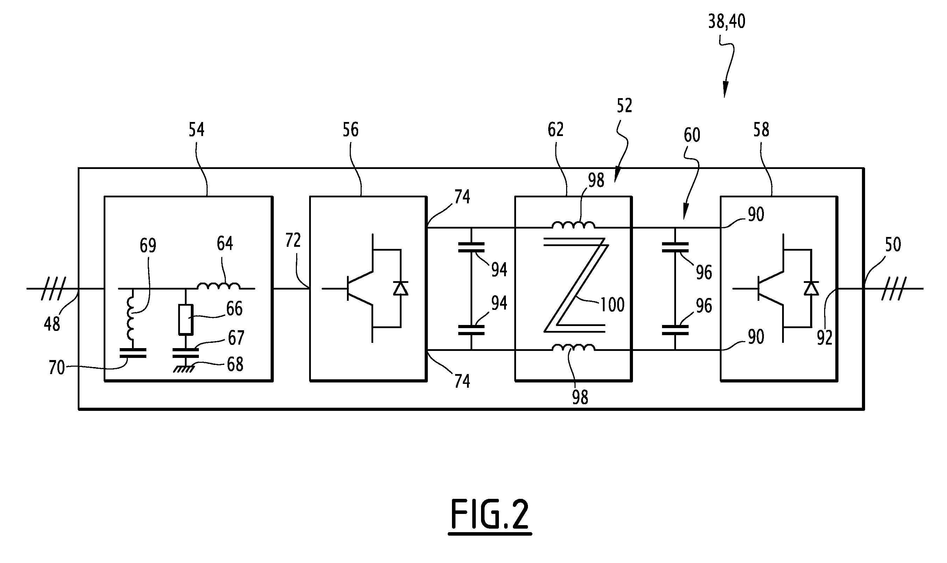

Chaque système d'alimentation 38 et le système additionnel d'alimentation 40 comportent une entrée de puissance 48, une sortie de puissance 50 et un convertisseur de fréquence 52, visible sur la figure 2, afin de faire varier la vitesse de rotation du moteur électrique 36 correspondant.

La puissance électrique de chaque système d'alimentation 38 et du système additionnel d'alimentation 40 est supérieure ou égale à la puissance électrique maximale du moteur électrique 36 correspondant. Les systèmes d'alimentation 38, et le système additionnel d'alimentation 40 sont, par exemple, identiques.

Chaque système d'alimentation 38 est relié par son entrée de puissance 48 au réseau électrique 12 et par sa sortie de puissance 50 en entrée d'un moteur électrique 36 correspondant par l'intermédiaire du dispositif auxiliaire de commutation 44 correspondant. Le système d'alimentation 38 bâbord, respectivement tribord, est relié au bus bâbord 15 via le quatrième disjoncteur 32 correspondant, respectivement au bus tribord 16 via le quatrième disjoncteur 32 correspondant.

Le système additionnel d'alimentation 40 comporte une unique sortie de puissance 50, et est relié par son entrée de puissance 48 au bus bâbord 15 par l'intermédiaire d'un quatrième disjoncteur et au bus tribord 16 par l'intermédiaire d'un autre quatrième disjoncteur.

Le dispositif principal de commutation 42 et les dispositifs auxiliaires de commutation 44 comportent chacun trois positions de commutation, à savoir une première position de connexion électrique, une deuxième position de connexion électrique, et une troisième position d'absence de connexion électrique, comme représenté sur la figure 1.

Le dispositif principal de commutation 42 est propre à connecter l'un ou l'autre des deux moteurs électriques 36 à l'unique sortie de puissance 50 du système additionnel d'alimentation. La première position de connexion du dispositif principal de commutation correspond, par exemple, au moteur électrique 36 bâbord, la deuxième position de connexion électrique correspondant au moteur électrique 36 tribord, et la dernière position correspondant au cas où le système additionnel d'alimentation n'est pas connecté à l'un des deux moteurs électriques 36.

La première position de connexion du dispositif auxiliaire de commutation 44 correspond à la connexion entre le système d'alimentation 38 et le moteur électrique 36 respectif. La deuxième position de connexion correspond à la connexion entre le système d'alimentation 38 et le dispositif de connexion au réseau terrestre 46 respectif lorsque le navire est à quai, et la troisième position correspond à une absence de connexion électrique en sortie du système d'alimentation 38.

Dans l'exemple de réalisation de la figure 2, le convertisseur de fréquence 52 comporte un filtre 54 connecté à l'entrée 48, un redresseur 56 connecté en sortie du filtre, un onduleur 58 connecté en sortie du redresseur via un bus continu 60 et un dispositif 62 de limitation du courant de mode commun propre à circuler entre le réseau électrique 12 et le moteur électrique 36 correspondant. La sortie de l'onduleur 58 est connectée à la sortie de puissance 50.

Dans l'exemple de réalisation de la figure 2, le convertisseur de fréquence 52 ne comprend pas de transformateur de tension connecté entre l'entrée 48 et le redresseur 56.

Dans l'exemple de réalisation de la figure 2, le convertisseur de fréquence 52 est bidirectionnel en puissance, et est propre à convertir le courant depuis l'entrée 48 vers la sortie 50, ou inversement depuis la sortie 50 vers l'entrée 48.

Le filtre 54 du système d'alimentation comporte, pour chaque phase du courant alternatif fourni par le réseau 12, une première bobine électromagnétique 64, une extrémité de la première bobine 64 étant connectée à l'entrée de puissance et l'autre extrémité étant connecté à l'entrée 72 du redresseur. Le filtre 54 comporte une résistance 66 et un condensateur 67 connectés en série entre l'extrémité de la première bobine connectée à l'entrée de puissance et une masse électrique 68. En complément, le filtre 54 comporte une deuxième bobine électromagnétique 69 et un condensateur 70 connectés en série à l'extrémité de la première bobine connectée à l'entrée de puissance.

Le redresseur 56 est propre à convertir le courant alternatif fourni par le réseau 12 en un courant continu délivré en sortie du redresseur.

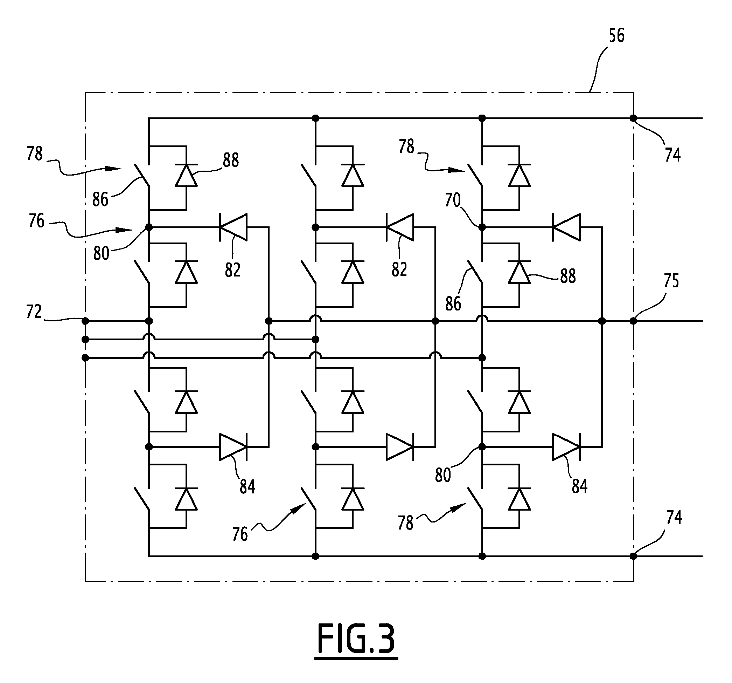

Le redresseur 56 est, par exemple, un redresseur commandé, bidirectionnel en puissance, également appelé AFE (de l'anglais Active Front End), comme représenté sur la figure 3. Il comporte une borne d'entrée 72 pour chaque phase du courant alternatif fourni par le réseau, deux bornes de sortie 74. Le redresseur 56 est, par exemple, un redresseur triphasé et comporte trois bornes d'entrée 72.

Le redresseur 56 est relié au réseau 12 sans présence d'un transformateur entre lui et le réseau alternatif 12 dans l'exemple de réalisation de la figure 2.

Dans l'exemple de réalisation de la figure 3, le redresseur 56 présente une topologie du type clampé par le neutre, également appelée topologie NPC (de l'anglais Neutral Point Clamped), et comprend un point milieu 75 entre les deux bornes de sortie et deux branches de commutation 76 pour chaque phase dudit courant alternatif. Chaque branche de commutation est connectée entre une borne d'entrée 72 respective et la borne de sortie 74 correspondante. Chaque branche de commutation 76 comporte, par exemple, deux interrupteurs électroniques commandables 78 connectés en série et reliés entre eux par un point intermédiaire 80. Pour chaque phase du courant alternatif, le point intermédiaire 80 d'une branche de commutation 76 est relié au point milieu 75 par l'intermédiaire d'une première diode 82 connectée en inverse, le point intermédiaire 80 de l'autre branche de commutation 76 étant reliée au point milieu 75 par l'intermédiaire d'une deuxième diode 84 connectée en sens direct.

Chaque interrupteur électronique commandable 78 est, par exemple, bidirectionnel en courant, et comporte un transistor 86 et une diode 88 connectée en anti-parallèle du transistor. Le transistor 86 est, par exemple, un transistor IGBT (de l'anglais Insulated Gate Bipolar Transistor).

En variante, le redresseur 56 présente une topologie du type piloté par le neutre, également appelée topologie NPP (de l'anglais Neutral Point Piloted). Le redresseur comporte un point milieu entre les deux bornes de sortie, deux branches extrêmes et une branche intermédiaire, également appelée branche transversale. Chaque branche extrême est connectée entre une borne d'entrée respective et la borne de sortie correspondante, et comporte un interrupteur électronique commandable. La branche intermédiaire est connectée entre une borne d'entrée respective et le point milieu, et comporte deux interrupteurs électroniques commandables connectés en anti-série.

L'onduleur 58 comporte deux bornes d'entrée 90, et une borne de sortie 92 pour chaque phase du courant alternatif délivré à la machine électrique 36, comme représenté sur la figure 2. L'onduleur 58 comporte des interrupteurs électroniques commandables propres à convertir le courant continu fourni par le redresseur 56 en un courant alternatif délivré au moteur 36 relié à sa sortie.

L'onduleur 58 est bidirectionnel en puissance, et est propre à convertir le courant depuis son entrée vers sa sortie, ou inversement depuis sa sortie vers son entrée.

L'onduleur 58 est, par exemple, un onduleur clampé par le neutre, également appelé onduleur NPC (de l'anglais Neutral Point Clamped). En variante, l'onduleur 58 est un onduleur piloté par le neutre, également appelé onduleur NPP (de l'anglais Neutral Point Piloted). L'onduleur 58 est, par exemple, un onduleur trois niveaux.

Le bus continu 60 comporte deux premiers condensateurs 94 et deux deuxièmes condensateurs 96. Les deux premiers condensateurs 94 sont connectés en série entre les deux bornes de sortie 74 du redresseur, et les deux deuxièmes condensateurs 96 sont connectés en série entre les bornes d'entrée 90 de l'onduleur. Lorsque le redresseur 56 comporte un point milieu de sortie entre les deux bornes de sortie 74, le point milieu des deux premiers condensateurs est connecté au point milieu de sortie du redresseur 56. Lorsque l'onduleur 58 comporte un point milieu d'entrée entre les deux bornes d'entrée 90, le point milieu des deuxièmes condensateurs 96 est connecté au point milieu d'entrée de l'onduleur 58.

Le dispositif de limitation 62 comporte un enroulement primaire 98 pour chacune des deux polarités du courant continu propre à circuler entre le redresseur et l'onduleur, et un noyau 100 de couplage magnétique des enroulements. En complément, le dispositif de limitation 62 comporte un enroulement secondaire, non représenté, connecté en série avec une résistance d'amortissement, et un deuxième noyau magnétique de couplage de l'enroulement secondaire avec les enroulements primaires.

Le fonctionnement de la chaîne de propulsion longitudinale du navire selon l'invention va être à présent décrit.

Lors du déplacement longitudinal du navire 10 et en l'absence de dysfonctionnement d'un des deux systèmes d'alimentation 38, le moteur bâbord 36 est alimenté par le bus bâbord 15 et le système d'alimentation 38 bâbord, et le moteur 36 tribord est alimenté par le bus tribord 16 et le système d'alimentation 38 tribord. Autrement dit, le dispositif principal de commutation 42 est dans sa troisième position d'absence de connexion électrique, et les dispositifs auxiliaires de commutation 44 sont dans leur première position de connexion électrique du système d'alimentation 38 au moteur électrique 36 correspondant, comme représenté sur la figure 1.

En cas de dysfonctionnement d'un des deux systèmes d'alimentation 38, le système d'alimentation en défaut est arrêté, et le système additionnel d'alimentation 40 est alors connecté au moteur électrique 36 correspondant au système d'alimentation en défaut par l'intermédiaire du dispositif principal de commutation 42. Autrement dit, le dispositif principal de commutation 42 est commuté de sa troisième position vers sa première ou sa deuxième position en fonction du moteur 36 à alimenter, et le dispositif auxiliaire de commutation 44 correspondant au système d'alimentation en défaut est commuté vers sa troisième position d'absence de connexion électrique.

Le navire selon l'invention permet donc de proposer une chaîne de propulsion longitudinale permettant de faciliter l'alimentation des moteurs électriques des deux propulseurs longitudinaux, aussi bien en mode de fonctionnement nominal, qu'en mode de fonctionnement dégradé dans le cas d'un défaut d'un système d'alimentation du moteur électrique d'entraînement d'un propulseur longitudinal.

En outre, la puissance électrique de chaque système d'alimentation 38, 40 étant supérieure ou égale à la puissance électrique maximale du moteur électrique 36 correspondant, la chaîne de propulsion longitudinale selon l'invention permet d'assurer une redondance à 100 % en cas de défaut d'un des deux systèmes d'alimentation 38 via le système additionnel d'alimentation 40.

La présence d'un système additionnel d'alimentation susceptible d'être connecté à l'un ou l'autre des deux moteurs électriques permet ainsi une augmentation importante de la disponibilité de la chaîne de propulsion longitudinale du navire.

En outre, le système additionnel d'alimentation 40 étant relié à la fois au bus bâbord 15 et au bus tribord 16 du réseau, la chaîne de propulsion longitudinale selon l'invention permet d'assurer une alimentation nominale des deux moteurs électriques 36 en cas de défaut électrique sur un des deux bus 15, 16. Un premier moteur est alors alimenté par le système d'alimentation 38 relié au bus 15, 16 fonctionnant normalement, et l'autre moteur électrique est alimenté par l'intermédiaire du système additionnel d'alimentation également relié au bus fonctionnant normalement.

Lorsque le navire 10 est à quai, les dispositifs de connexion 46 permettent de connecter au moins un système d'alimentation 38 au réseau électrique alternatif terrestre. Chaque système d'alimentation 38 est bidirectionnel en puissance, et le convertisseur de fréquence dudit système d'alimentation permet alors de convertir le courant fourni par le réseau terrestre présentant une première fréquence en un courant délivré au réseau alternatif du navire présentant une deuxième fréquence. Ceci permet alors d'alimenter un ou les deux bus 15, 16 du réseau électrique du navire sans nécessiter l'utilisation des moteurs diesel 22.

En outre, lorsque le système additionnel d'alimentation 40 n'est pas connecté à l'un des deux moteurs électriques 36, il est propre à fournir de l'énergie réactive au réseau alternatif 12 du navire, ou à absorber de l'énergie réactive depuis le réseau alternatif 12 du navire.

Les redresseurs 56 de type AFE permettent de diminuer le taux de distorsion harmonique sur le réseau du navire et de limiter ainsi les échauffements sur tous les équipements électriques du navire.

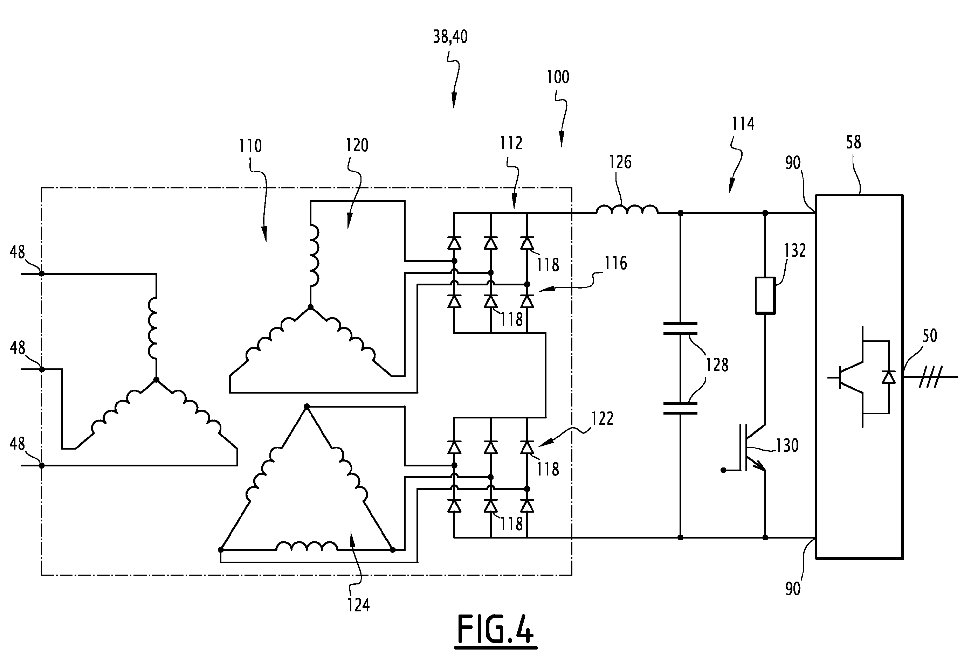

La figure 4 illustre un deuxième mode de réalisation de l'invention pour lequel les éléments analogues au premier mode de réalisation, décrits précédemment, sont repérés par des références identiques, et ne sont donc pas décrits à nouveau.

Selon le deuxième mode de réalisation, chaque système d'alimentation 38 et le système additionnel d'alimentation 40 comportent un convertisseur de fréquence 100 agencé entre l'entrée de puissance 48 et la sortie de puissance 50, afin de faire varier la vitesse de rotation du moteur électrique 36 correspondant.

Le convertisseur de fréquence 100 comporte un transformateur de tension 110 connecté à l'entrée de puissance 48, un pont de diodes dodécaphasé 112 connecté en sortie du transformateur de tension, un hacheur 114 connecté en sortie du pont de diodes dodécaphasé et l'onduleur 58, décrit précédemment, connecté en sortie du hacheur 114.

Le pont de diodes dodécaphasé 112 comporte, comme connu en soi, un premier redresseur triphasé à diodes 116 comportant six diodes 118 et connecté à un premier ensemble d'enroulements secondaires 120 connectés en étoile du transformateur de tension, et un deuxième redresseur triphasé à diodes 122 comportant six diodes 118 et connecté à un deuxième ensemble d'enroulements secondaires 124 connectés en triangle du transformateur de tension.

Le hacheur 114 comporte une bobine électromagnétique 126 connectée à une des deux bornes d'entrée 90 de l'onduleur, deux condensateurs 128 connectés entre les deux bornes 90, ainsi qu'un thyristor 130 et une résistance de freinage 132 connectés en série entre les deux bornes 90, en parallèle des condensateurs 128.

Le convertisseur de fréquence 100 du deuxième mode de réalisation ne permet pas de régénérer de la puissance active vers le réseau électrique, ni de fournir ou absorber de l'énergie réactive. En outre, lorsque le navire 10 est à quai, le convertisseur de fréquence 100 du deuxième mode de réalisation, unidirectionnel en puissance, ne permet pas de d'alimenter le réseau électrique de bord du navire par le réseau électrique alternatif terrestre.

Le fonctionnement de la chaîne de propulsion longitudinale selon ce deuxième mode de réalisation est par ailleurs analogue à celui du premier mode de réalisation, et n'est donc pas décrit à nouveau.

Les avantages de ce deuxième mode de réalisation en ce qui concerne le fonctionnement simplifié et la disponibilité de la chaîne de propulsion longitudinale sont analogues à ceux du premier mode de réalisation, et ne sont donc pas décrits à nouveau.

On conçoit ainsi que le navire selon l'invention permet de proposer une chaîne de propulsion longitudinale permettant de faciliter l'alimentation des moteurs électriques des deux propulseurs longitudinaux.

Selon un deuxième aspect de l'invention, indépendant du premier aspect de l'invention qui a été décrit précédemment, l'invention concerne un navire comprenant un réseau électrique et une chaine de propulsion connectée au réseau électrique, la chaine de propulsion comportant au moins un propulseur propre à déplacer le navire et, pour le ou chaque propulseur, un moteur électrique d'entraînement du propulseur longitudinal, connecté en entrée dudit propulseur, et un système d'alimentation du moteur électrique, connecté en entrée dudit moteur et relié au réseau électrique.

Selon ce deuxième aspect, le navire comprend en outre des moyens de connexion du système d'alimentation à un réseau électrique alternatif terrestre, dans lequel le système d'alimentation est bidirectionnel en puissance, et le convertisseur de fréquence est propre à convertir le courant fourni par le réseau terrestre présentant une première fréquence en un courant délivré au réseau alternatif du navire présentant une deuxième fréquence. Les autres caractéristiques du premier aspect de l'invention sont facultatives pour ce deuxième aspect.

L'homme du métier comprendra que le réseau électrique, le propulseur, le moteur électrique d'entraînement et le système d'alimentation sont, par exemple, identiques respectivement au réseau électrique 12, au propulseur longitudinal 34, au moteur électrique 36 et au système d'alimentation 38 décrits précédemment en regard des figures 1 à 3.

L'homme du métier comprendra également que les moyens de connexion et le convertisseur de fréquence sont, par exemple, identiques respectivement au dispositif de connexion 46 et au convertisseur de fréquence 52 décrits précédemment en regard des figures 1 à 3. La chaîne de propulsion comprend, par exemple, au moins un dispositif de commutation, identique au dispositif auxiliaire de commutation 44 décrit précédemment, le dispositif auxiliaire de commutation reliant le système d'alimentation au moteur électrique, d'une part, et aux moyens de connexion au réseau électrique terrestre, d'autre part.

Selon ce deuxième aspect, lorsque le navire est à quai, le dispositif de connexion 46 permet de connecter le système d'alimentation 38 au réseau électrique alternatif terrestre. Le système d'alimentation 38 est bidirectionnel en puissance, et le convertisseur de fréquence dudit système d'alimentation permet alors de convertir le courant fourni par le réseau terrestre présentant une première fréquence en un courant délivré au réseau alternatif du navire présentant une deuxième fréquence. Ceci permet alors d'alimenter le réseau électrique 12 du navire sans nécessiter l'utilisation des moteurs diesel 22.

## Revendications

1. Navire (10) s'étendant suivant une direction longitudinale (X), comprenant un réseau électrique (12) et une chaine de propulsion longitudinale (14) connectée au réseau électrique (12), la chaine de propulsion longitudinale (14) comportant :
- deux propulseurs longitudinaux (34) propres à déplacer le navire (10) selon sa direction longitudinale (X), et
pour chaque propulseur longitudinal (34):
+ un moteur électrique (36) d'entraînement du propulseur longitudinal (34), connecté en entrée dudit propulseur (34),
+ un système (38) d'alimentation du moteur électrique (36), connecté en entrée dudit moteur (36) et relié au réseau électrique (12),
**caractérisé en ce que** le navire comprend en outre un système additionnel (40) d'alimentation des moteurs électriques (36), le système additionnel d'alimentation (40) comportant une unique sortie de puissance et étant relié aux deux moteurs électriques (36) par l'intermédiaire d'un dispositif de commutation (42), le dispositif de commutation (42) étant propre à connecter l'un ou l'autre des deux moteurs électriques (36) à l'unique sortie de puissance du système additionnel d'alimentation (40).

2. Navire (10) selon la revendication 1, dans lequel la chaîne de propulsion longitudinale (14) est constituée de deux propulseurs longitudinaux (34), de deux moteurs électriques d'entraînement (36), de trois systèmes (38, 40) d'alimentation des moteurs électriques, et du dispositif de commutation (42).

3. Navire (10) selon la revendication 1 ou 2, dans lequel la puissance électrique de chaque système d'alimentation (38, 40) est supérieure ou égale à la puissance électrique maximale du moteur électrique (36) correspondant.

4. Navire (10) selon l'une quelconque des revendications précédentes, dans lequel le réseau électrique (12) est un réseau alternatif, et chaque système d'alimentation (38, 40) comporte un convertisseur de fréquence (52 ; 100), afin de faire varier la vitesse de rotation du moteur électrique (36) correspondant.

5. Navire (10) selon la revendication 4, dans lequel le convertisseur de fréquence (52) comporte un redresseur de tension (56) connecté à un onduleur de tension (58).

6. Navire (10) selon la revendication 5, dans lequel le redresseur de tension (56) comporte une borne d'entrée (72) pour chaque phase du courant alternatif, deux bornes de sortie (74), deux branches de commutation (76) pour chaque phase du courant alternatif, chaque branche de commutation (76) étant connectée entre une borne d'entrée (72) respective et la borne de sortie (74) correspondante, chaque branche de commutation (76) comportant au moins un interrupteur électronique commandable (78).

7. Navire (10) selon l'une quelconque des revendications 4 à 6, comprenant en outre des moyens (46) de connexion d'au moins un système d'alimentation (38) à un réseau électrique alternatif terrestre, dans lequel le système d'alimentation (38) est bidirectionnel en puissance, et le convertisseur de fréquence (52) est propre à convertir le courant fourni par le réseau terrestre présentant une première fréquence en un courant délivré au réseau alternatif (12) du navire présentant une deuxième fréquence.

8. Navire (10) selon l'une quelconque des revendications précédentes, dans lequel le réseau électrique (12) est un réseau alternatif, et le système additionnel d'alimentation (40) est propre à fournir de l'énergie réactive au réseau alternatif (12) du navire, ou à absorber de l'énergie réactive depuis le réseau alternatif (12) du navire, lorsque le système additionnel d'alimentation (40) n'est pas connecté à l'un des deux moteurs électriques (36).

9. Navire (10) selon la revendication 4, dans lequel le convertisseur de fréquence (100) comporte un transformateur de tension (110), un pont de diodes dodécaphasé (112) connecté en sortie du transformateur de tension (110), un hacheur (114) connecté en sortie du pont de diodes dodécaphasé (112), et un onduleur de tension (58) connecté en sortie du hacheur (114).

10. Navire (10) selon la revendication 9, dans lequel le hacheur (114) comporte une résistance de freinage (132).

## Patentansprüche

1. Schiff (10), das sich in einer longitudinalen Richtung (X) erstreckt und ein elektrisches Netz (12) sowie eine Kette (14) für longitudinalen Vortrieb, die mit dem elektrischen Netz (12) verbunden ist, umfasst, wobei die Kette (14) für longitudinalen Vortrieb umfasst:
- zwei longitudinale Antriebsorgane (34), die geeignet sind, das Schiff (10) in der longitudinalen Richtung (X) zu bewegen, und
- für jedes longitudinale Antriebsorgan (34):
+ einen Elektromotor (36) für den Antrieb des longitudinalen Antriebsorgans (34), der mit dem Eingang des Antriebsorgans (34) verbunden ist,
+ ein System (38) für die Versorgung des Elektromotors (36), das mit dem Eingang des Motors (36) und mit dem elektrischen Netz (12) verbunden ist,
**dadurch gekennzeichnet, dass** das Schiff außerdem ein zusätzliches System (40) für die Versorgung der Elektromotoren (36) umfasst, wobei das zusätzliche Versorgungssystem (40) einen einzigen Leistungsausgang aufweist und mit den zwei Elektromotoren (36) über eine Kommutationsvorrichtung (42) verbunden ist, wobei die Kommutationsvorrichtung (42) geeignet ist, den einen oder den anderen der zwei Elektromotoren (36) mit dem einzigen Leistungsausgang des zusätzlichen Versorgungssystems (40) zu verbinden.

2. Schiff (10) nach Anspruch 1, wobei die Kette (14) für longitudinalen Vortrieb aus zwei longitudinalen Antriebsorganen (34), zwei Antriebselektromotoren (36), drei Systemen (38, 40) für die Versorgung der Elektromotoren und einer Kommutationsvorrichtung (42) gebildet ist.

3. Schiff (10) nach Anspruch 1 oder 2, wobei die elektrische Leistung jedes Versorgungssystems (38, 40) größer oder gleich der maximalen elektrischen Leistung des entsprechenden Elektromotors (36) ist.

4. Schiff (10) nach einem der vorhergehenden Ansprüche, wobei das elektrische Netz (12) ein Wechselstromnetz ist und jedes Versorgungssystem (38, 40) einen Frequenzwandler (52; 100) aufweist, um die Drehzahl des entsprechenden Elektromotors (36) zu variieren.

5. Schiff (10) nach Anspruch 4, wobei der Frequenzwandler (52) einen Spannungsgleichrichter (56), der mit einem Spannungswechselrichter (58) verbunden ist, umfasst.

6. Schiff (10) nach Anspruch 5, wobei der Spannungsgleichrichter (56) einen Eingangsanschluss (72) für jede Phase des Wechselstroms, zwei Ausgangsanschlüsse (74) und zwei Kommutationszweige (76) für jede Phase des Wechselstroms umfasst, wobei jeder Kommutationszweig (76) zwischen einen jeweiligen Eingangsanschluss (72) und den entsprechenden Ausgangsanschluss (74) geschaltet ist und jeder Kommutationszweig (76) wenigstens einen steuerbaren elektronischen Ein/Aus-Schalter (78) aufweist.

7. Schiff (10) nach einem der Ansprüche 4 bis 6, das außerdem Mittel (46) für den Anschluss wenigstens eines Versorgungssystems (38) an ein terrestrisches Wechselstromnetz umfasst, wobei das Versorgungssystem (38) leistungstechnisch bidirektional ist, und der Frequenzwandler (52) geeignet ist, den von dem terrestrischen Netz gelieferten Strom, der eine erste Frequenz aufweist, in einen an das Wechselstromnetz (12) des Schiffes gelieferten Strom, der eine zweite Frequenz aufweist, zu wandeln.

8. Schiff (10) nach einem der vorhergehenden Ansprüche, wobei das elektrische Netz (12) ein Wechselstromnetz ist und das zusätzliche Versorgungssystem (40) geeignet ist, Blindenergie an das Wechselstromnetz (12) des Schiffes zu liefern oder Blindenergie von dem Wechselstromnetz (12) des Schiffes zu absorbieren, wenn das zusätzliche Versorgungssystem (40) nicht mit einem der zwei Elektromotoren (36) verbunden ist.

9. Schiff (10) nach Anspruch 4, wobei der Frequenzwandler (100) einen Spannungstransformator (110), eine zwölfphasige Diodenbrücke (112), die mit dem Ausgang des Spannungstransformators (110) verbunden ist, einen Zerhacker (114), der mit dem Ausgang der zwölfphasigen Diodenbrücke (112) verbunden ist, und einen Spannungswechselrichter (58), der mit dem Ausgang des Zerhackers (114) verbunden ist, umfasst.

10. Schiff (10) nach Anspruch 9, wobei der Zerhacker (114) einen Bremswiderstand (132) umfasst.

## Claims

1. Ship (1) extending in a longitudinal direction (X), comprising an electrical network (12) and a longitudinal propulsion chain (14) connected to the electrical network (12), the longitudinal propulsion chain (14) comprising:
- two longitudinal propellers (34) able to move the ship (10) along its longitudinal axis (X), and
for each longitudinal propeller (34):
+ an electric motor (36) for driving the longitudinal propeller (34), connected at the input to said propeller (34),
+ a supply system (38) for the electric motor (36), connected at the input to said motor (36) and linked to the electrical network (12),
**characterised in that** the ship also comprises an additional supply system (40) for the electric motors (36), wherein the additional supply system (40) comprises a single power output and is linked to the two electric motors (36) via a switching device (42), the switching device being able to connect the one or the other of the two electric motors (36) to the single power output of the additional supply system (40).

2. Ship (10) according to claim 1, wherein the longitudinal propulsion chain (14) comprises two longitudinal propellers (24), two electrical drive motors (36), three supply systems (38, 40) for the electric motors, and a switching device (42).

3. Ship (10) according to claim 1 or 2, wherein the electrical power of each supply system (38, 40) is greater than or equal to the maximum electrical power of the corresponding electric motor (36).

4. Ship (10) according to any of the preceding claims, wherein the electrical network (12) is an alternating network, and each supply system (38, 40) comprises a frequency converter (52; 100) in order to vary the rotation speed of the corresponding electric motor (36).

5. Ship (10) according to claim 4, wherein the frequency converter (52) comprises a voltage rectifier (56) connected to a voltage inverter (58).

6. Ship (10) according to claim 5, wherein the voltage rectifier (56) comprises an input terminal (72) for each phase of the alternating current, two output terminals (74), two switching branches (76) for each phase of the alternating current, each switching branch (76) being connected between a respective input terminal (72) and the corresponding output terminal (74), each switching branch (76) comprising at least one controllable electronic breaker switch (78).

7. Ship (10) according to any of claims 4 to 6, also comprising means (46) for connecting at least one supply system (38) to a terrestrial alternating electrical network, wherein the supply system (38) is bidirectional in power, and the frequency converter (52) is able to convert the current supplied by the terrestrial network, having a first frequency, into a current delivered to the alternating network (12) of the ship, having a second frequency.

8. Ship (10) according to any of the preceding claims, wherein the electrical network (12) is an alternating network, and the additional supply system (40) is able to supply reactive energy to the alternating network (12) of the ship, or to absorb reactive energy from the alternating network (12) of the ship when the additional supply system (40) is not connected to one of the two electric motors (36).

9. Ship (10) according to claim 4, wherein the frequency converter (100) comprises a voltage transformer (110), a dodecaphase diode bridge (112) connected at the output of the voltage transformer (110), a chopper (114) connected at the output of the dodecaphase diode bridge (112), and a voltage inverter (58) connected at the output of the chopper (114).

10. Ship (10) according to claim 9, wherein the chopper (114) comprises a braking resistor (132).
